## Europäisches Patentamt

## European Patent Office

## Office européen des brevets

(19)

(11) Veröffentlichungsnummer: **0 101 674**
A2

(12) # EUROPÄISCHE PATENTANMELDUNG

(21) Anmeldenummer: **83890135.3**

(22) Anmeldetag: **17.08.83**

(51) Int. Cl.³: **A 21 C 5/00**, A 21 C 9/04, A 21 C 9/08

(30) Priorität: **17.08.82 AT 3119/82**
**26.08.82 AT 3223/82**
**01.08.83 AT 2786/83**
**01.08.83 AT 2787/83**

(43) Veröffentlichungstag der Anmeldung: **29.02.84**
**Patentblatt 84/9**

(84) Benannte Vertragsstaaten: **AT DE FR GB IT NL**

(71) Anmelder: **Ing. Franz Prohaska Gesellschaft m.b.H.,**
**Preding 129, A-8160 Weiz/Stmk. (AT)**

(72) Erfinder: **Prohaska, Franz, Schlossergasse 9,**
**A-8160 Weiz/Stmk. (AT)**

(74) Vertreter: **Berger, Erhard, Dr.,**
**Siebensterngasse 39 Postfach 306, A-1071 Wien (AT)**

(54) **Vorrichtung zur Herstellung von Teigstücken.**

(57) Vorrichtung zur Herstellung von Teigstücken.

Für die Herstellung von gewichtsgenau geteilten und gegebenenfalls anschliessend geformten Teigstücken wird eine Vorrichtung mit einer Förderschnecke (2), die in einem Gehäuse (1) angeordnet ist, in welches ein Teigvorratsbehälter (5) im wesentlichen radial zur Förderschnecke (2) mündet und an welches eine, vorzugsweise auswechselbare, Austrittsdüse (8) anschliesst, durch welche der Teig von der Förderschnecke (2) ausgepresst wird, und mit einer von dem ausgepressten Teigstrang auslösbaren, der Austrittsdüse (8) nachgeordneten, selbsttätigen Schneideinrichtung (9) für den Teigstrang vorgeschlagen, welche dadurch gekennzeichnet ist, dass die Förderschnecke (2) einen zwischen der Mündung des Teigvorratsbehälters (5) und der Austrittsdüse (8) angeordneten Pressabschnitt (6) mit abnehmendem Fördervolumen aufweist, dass im Übergangsbereich von der Förderschnecke (2) zur Austrittsöffnung der Austrittsdüse (8) eine zusätzliche Förderquerschnittsverengung vorgesehen ist, und dass unterhalb der Schneideinrichtung (9) gegebenenfalls eine Übergabevorrichtung und/oder eine Formvorrichtung für die ausgepressten und geteilten Teiglinge vorgesehen ist.

Die Formvorrichtung für die geteilten Teigstücke kann eine Teigrollvorrichtung oder eine Walzvorrichtung oder eine Schleifeinrichtung u. dgl. sein.

genau kontrollierten Mindestgewicht verkauft. Bei Gewichtskontrollen werden jeweils zehn Stück auf einmal gewogen und der Bäcker beim Unterschreiten des Mindestgewichtes bestraft.Übergewichte gehen zu Lasten des Bäckers und sollen ebenso wie Untergewichte vermieden werden.

Es ist Aufgabe der Maschinenindustrie Einrichtungen zu schaffen, die eine möglichst hohe Gewichtsgenauigkeit sichern. Neben einem möglichst gleichbleibenden Volumsgewicht des zu verarbeitenden Teiges ist für die Erreichung einer möglichst geringen Gewichtsdifferenz die Einhaltung einer gleichbleibenden Länge der Teigstücke von größter Wichtigkeit.

Zur Lösung dieser Aufgabe schlägt die Erfindung eine Vorrichtung gemäß Anspruch 1 vor. Durch diese Ausbildung wird ein weitgehendes Auspreßen der Gärgase infolge des hohen erreichbaren Druckes erzielt , sodaß damit die Gewichtsgenauigkeit der abgeteilten Teigstücke wesentlich erhöht wird.Nach dem Abschneiden des Teigstranges wird dieser für das nächste Teigstück aus der Austrittsdüse gepreßt. Mit dem Austreten des Teigstranges tritt eine Entspannung des Teiges ein und die Schnittfläche wölbt sich ungleichmäßig. Dadurch ergeben sich kleine Gewichtsdifferenzen Diese werden in weiterer Ausgestaltung der Erfindung dadurch beseitigt, daß eine die Schneideinrichtung auslösende, dem ausgepreßten Teigstrang mit einem vorbestimmten Druck entgegenwirkende schwenkbare Klappe oder Walze od.dgl. vorgesehen ist.

Um einen besonders hohen Druck zu erreichen, sieht die Erfindung vor, daß zumindest im Preßabschnitt die Förderschnecke eine zylindrische Hüllfläche besitzt, von einem zylindrischen Gehäusewandabschnitt umgeben ist, mit einer zur Austrittsdüse hin abnehmenden Steigung der Schneckengänge ausgestattet und mit einem vorzugsweise zylindrischen ,Schneckenkern versehen ist.

Die zusätzliche Förderquerschnittsverengung wird gemäß weiterer Erfindung von einem oder mehreren , innerhalb des Gehäuses und/oder innerhalb der Austrittsdüse angeordneten Einbauteilen gebildet.

Ein weiteres Merkmal der Erfindung besteht darin, daß ein Einbauteil von einem an die Gehäusewand anschließenden, ein Gegenlager der Förderschnecke aufnehmenden Ansatz gebildet ist. Bei dieser Ausbildung wird der Teigstrang von einer Seite her radial zusammengedrückt. Die Anordnung eines Gegenlagers für die Förderschnecke in diesem Ansatz ermöglicht einen größeren Druck durch die nun zweiseitig gelagerte Förderschnecke.

Ein weiteres Merkmal der Erfindung sieht vor, daß ein Einbauteil als das Gehäuseinnere quer zur Förderschnecke durchsetzender, vorzugsweise auswechselbarer Staubolzen ausgebildet ist. Dabei ist die einfache Konstruktion bei hoher Wirksamkeit von Vorteil. Bei auswechselbaren Staubolzen kann der jeweils durch den Staubolzen bewirkte Druck auf die jeweilige Teigzusammensetzung und auf die jeweilige Form der Austrittsöffnung der Austrittsdüse abgestimmt werden, wobei bei Wechsel der Austrittsdüse oder der Teigrezeptur nur der Staubolzen ausgewechselt werden muß.

Gemäß einem weiteren Merkmal der Erfindung ist vorgesehen, daß der Staubolzen einen elliptischen Querschnitt aufweist und um eine quer zur Förderschnecke gelegene Achse verdrehbar ist. Bei dieser Ausbildung kann das Ausmaß der zusätzlichen Querschnittsverengung durch einfaches Verdrehen des Staubolzens verstellt werden.

- 1 -

0101674

Die Erfindung betrifft eine Vorrichtung zur Herstellung von Teigstücken , mit einer Förderschnecke, die in einem Gehäuse angeordnet ist, in welches ein Teigvorratsbehälter im wesentlichen radial zur Förderschnecke mündet und an welches eine, vorzugsweise auswechselbare , Austrittsdüse anschließt, durch welche der Teig von der Förderschnecke ausgepreßt wird, und mit einer von dem ausgepreßten Teigstrang auslösbaren der Austrittsdüse nachgeordneten, selbsttätigen Schneideinrichtung für den Teigstrang.

Zum Teilen von Teigen sind Teigteilmaschinen mit Schneckenförderung und Auspreßmundstück bekannt, bei welchen unterhalb eines Einfülltrichters eine Förderschnecke angeordnet ist, die den in den Einfülltrichter eingefüllten Teig durch das Auspreßmundstück drückt. Die Höhe des dabei aufgebauten Teigdruckes ist sehr begrenzt, weil im Bereich des Einfülltrichters der von der Schnecke transportierte Teig nach oben in den Trichter ausweicht. Nur der Teigschub, der durch die Bewegung der Schnecke entsteht und einen Widerstand im konischen Mundstück findet, dient dem Aufbau eines Druckes auf die Teigmasse. Dieser ist zu klein , um die geforderte Gleichmäßigkeit des Gewichtes der abgeteilten Teigstücke zu sichern. Abgeteilt werden die Teigstücke dadurch, daß der aus dem Auspreßmundstück ausgepreßte Teigstrang einen in entsprechender Entfernung von dem Mundstück befindlichen Mikroschalter betätigt. Dadurch wird ein Messer in Bewegung versetzt und der aus dem Mundstück herausragende Teigstrang knapp neben dem Mundstück abgeschnitten. Auf diese Weise entstehen Teigstücke gleicher Länge , aber unterschiedlichen Gewichtes. Diese Gewichtsunterschiede kommen durch die während des Teilvorganges weiterlaufenden Gärprozesse zustande. Beim Semmelteig wirkt sich die laufende Raumgewichtsänderung infolge der Kohlensäureentwicklung durch die dem Teig zugesetzte Hefe überaus erschwerend auf die Teilung in stets gewichtsgleiche Teigstücke aus.

Dies führt bei den bekannten Teigteilmaschinen mit Schneckenförderung zu Teigstücken mit nicht mehr tolerierbaren Gewichtsdifferenzen, weil sich das Raumgewicht des noch im Einfülltrichter befindlichen Teiges während des gesamten Teilvorganges ständig ändert, sodaß ein zu Beginn des Teilvorganges abgeteiltes Teigstück ein anderes Gewicht aufweist als ein am Ende des Teilvorganges abgeteiltes Teigstück.

Neben den Teigteilmaschinen mit Schneckenförderung sind noch die als sogenannte Saugteiler bezeichneten Teigteilmaschinen bekannt, bei welchen der Teig von einem Einfülltrichter in eine Hauptkammer eines Hauptkolbens gelangt, von wo er mittels des Hauptkolbens in einzelne Teilkammern gedrückt und durch Abscheren von dem Teig in der Hauptkammer getrennt d.h. geteilt wird. Auch bei diesen Teigteilmaschinen führt der fortlaufende Gärprozeß in dem in der Hauptkammer und im Einfülltrichter befindlichen Teig zu unterschiedlich schweren Teigstücken.

Durch die in letzter Zeit angestiegenen Hefezugaben bei reinen Weizenteigen oder bei Teigen mit einem höheren Weizenanteil können die sich aus dem stärkeren Gärprozeß ergebenden Gewichtsunterschiede und die damit einhergehenden Nachteile nicht mehr länger vernachlässigt oder durch höheres Stückgewicht ausgeglichen werden.

In vielen Staaten wird Gebäck nach Stück mit jeweils genau bestimmten und behördlich

- 3 -                                                    0101674

In weiterer Ausgestaltung der Erfindung ist vorgesehen, daß die Formvorrichtung als Teigrollvorrichtung ausgebildet ist, welche aus einem unteren, die Teiglinge unterstützenden umlaufenden Band und einem oberhalb letzterem angeordneten umlaufenden Wirkband oder feststehenden Wirkbrett besteht, wobei das untere Band vom Transportband der Übergabevorrichtung gebildet ist. Durch diese Ausbildung kann der portionie te und beim Austreten aus dem Auspreßstutzen vorgeformte Teigling ohne Zwischengärun direkt gerollt werden, sodaß das aus der erfindungsgemäßen Vorrichtung austretende Teigstück nur mehr der Endgärung unterworfen zu werden braucht.

Ein weiteres Merkmal der Erfindung besteht darin, daß die Formvorrichtung als Walzvorrichtung ausgebildet ist, welche aus einem Zubringerband mit nachgeordneter Walzeinheit und einem Abtransportband besteht, oberhalb welchem gegebenenfalls eine Einrollvorrichtung für die breitgewalzten Teiglinge angeordnet ist, wobei das Zubringer band vom Transportband der Übergabevorrichtung gebildet ist. Diese Ausbildung erlaubt es, aus z.B. quadratischen oder rechteckigen portionierten Teiglingen gerollte oder gewickelte oder gewickelte und gerollte Teigstücke ohne Zwischengärung herzustellen.

Ferner sieht die Erfindung zur Herstellung von Formgebäck vor, daß die Formvorrichtung oberhalb des Transportbandes der Übergabevorrichtung angeordnete Formstempel od. dgl. für die auf dem Transportband liegenden Teiglinge aufweist.

Soll mit der erfindungsgemäßen Vorrichtung ein kugeliges Teigstück hergestellt werden, so wird erfindungsgemäß die Formvorrichtung als Schleifeinrichtung ausgebildet.

Dazu kann erfindungsgemäß vorgesehen sein, daß die Schleifeinrichtung ein unterhalt der Schneideinrichtung angeordnetes endloses, in einer vertikalen Ebene umlaufendes, vorzugsweise als Becherband ausgebildetes, Förderband aufweist, oberhalb dessen oberen Trumes eine Schleifplatte und unterhalb dessen unteren Trumes die Übergabeei: richtung für die aus der Schleifeinrichtung austretenden Teiglinge angeordnet sind. Durch diese Ausbildung ist eine direkte Übergabe der portionierten Teiglinge in die Schleifeinrichtung möglich, wobei die Schleifzeit nicht von der Teilgeschwindigkeit abhängt.

Ein weiteres Merkmal der Erfindung besteht darin, daß das Becherband mehrere hinter einander angeordnete Behälter unterschiedlicher Größe für die Aufnahme je nach Behältergröße unterschiedlich großer oder unterschiedlich vieler gleich großer Teigstücke aufweist. Diese Ausbildung erlaubt es die erfindungsgemäße Vorrichtung für unterschiedliche Gewichtsbereiche zu verwenden. Dabei kann erfindungsgemäß vorgesehen sein, daß jeweils alle Behälter mit unterschiedlicher Größe der Größe nach geordnet und zu einer Gruppe zusammengefaßt sind, sodaß mehrere hintereinander angeordnete gleichartige Gruppen entstehen.

In weiterer Ausgestaltung der Erfindung sind die Behälter als Zylinder mit unterschiedlichen Durchmessern ausgebildet, wobei jeweils der Behälterboden zur Regulierung von Behältervolumen bzw. Schleifdruck als Kolben ausgebildet ist, welcher mittels zwischen den Trumen des Becherbandes angeordneten Führungen verschiebbar ist. In dieser Ausführung kann auch die Schleifeinrichtung auf die jeweilige Teigkonsistenz bzw. Teigstückgröße eingestellt werden ohne die gesamte Vorrichtung umbauen zu müssen.

Um bei der Bearbeitung des Teiges in der erfindungsgemäßen Vorrichtung Klebeerscheinungen hintanzuhalten ist oberhalb jedes Bandes insbesondere über jeder Übergabestelle ein Gebläse zum Antrocknen der Teigstücke angeordnet.

Um ein Ankleben an die die Teigstücke berührenden Flächen der erfindungsgemäßen Vorrichtung zu vermeiden, sieht eine weitere Ausgestaltung der Erfindung vor, daß oberhalb jedes Bandes zumindest eine Berieselungseinrichtung angeordnet ist. Dabei kann als Berieselungsgut je nach der Konsistenz des zu verarbeitenden Teiges Mehl oder Kleie od. dgl. verwendet werden. Das Berieseln der Bänder und der Teiglinge ist insbesondere bei sehr wasserhaltigen Teigen wie z.B. für arabisches Fladenbrot wichtig, weil solche Teige sonst gar nicht maschinell verarbeitet werden könnten.

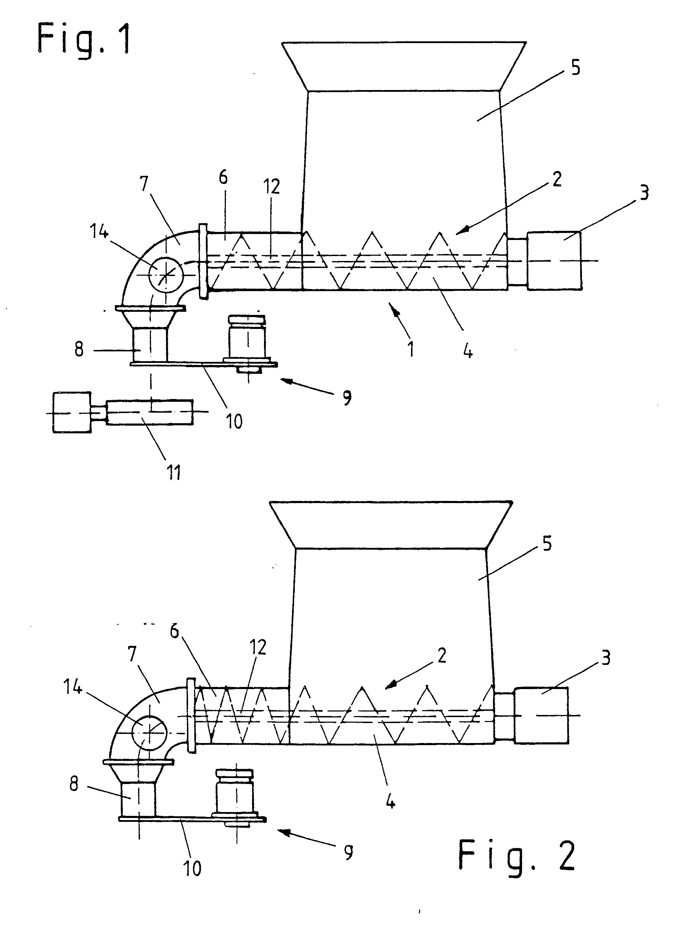

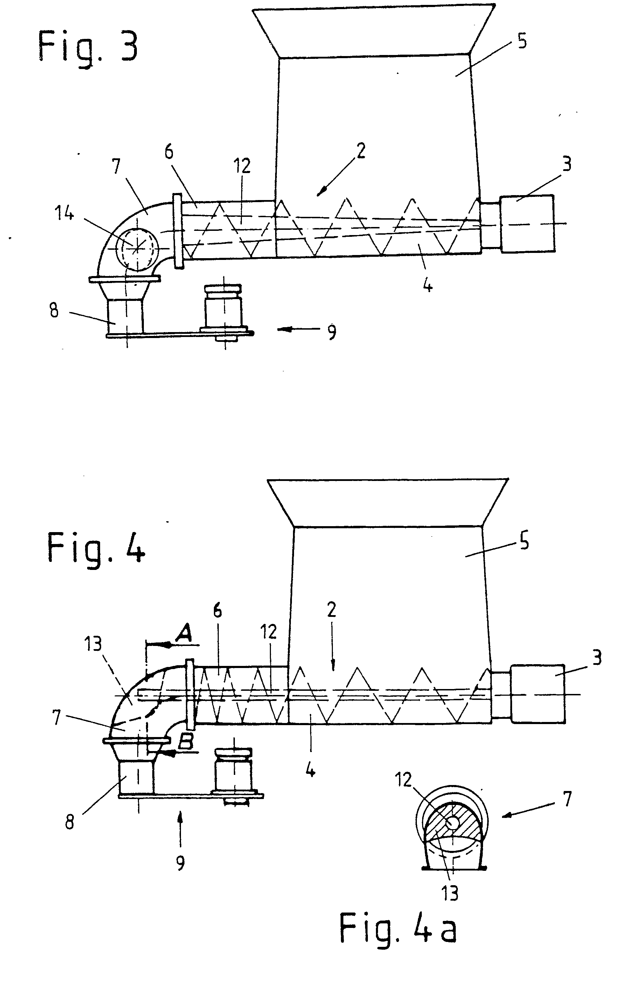

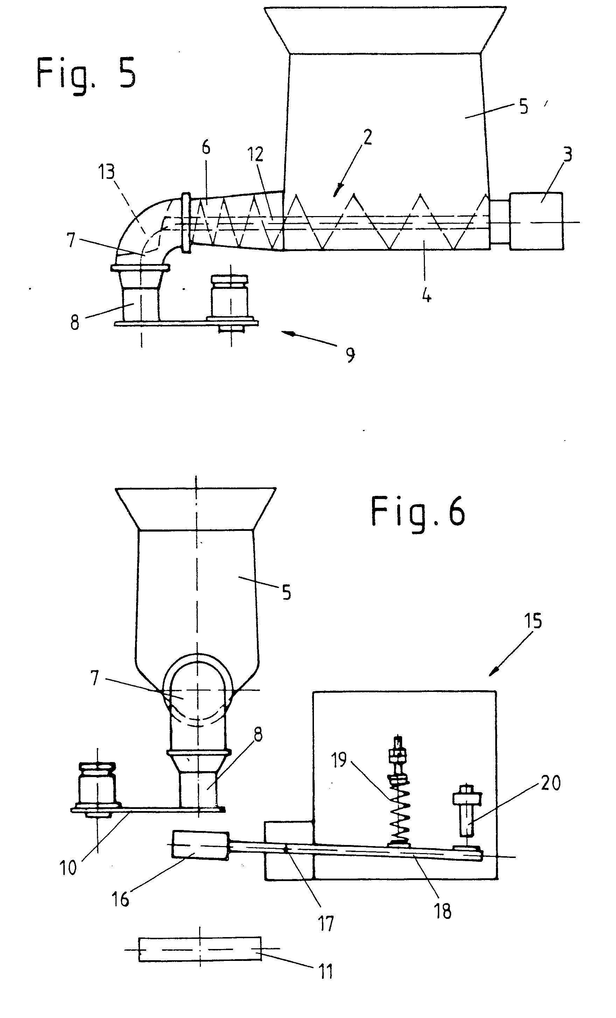

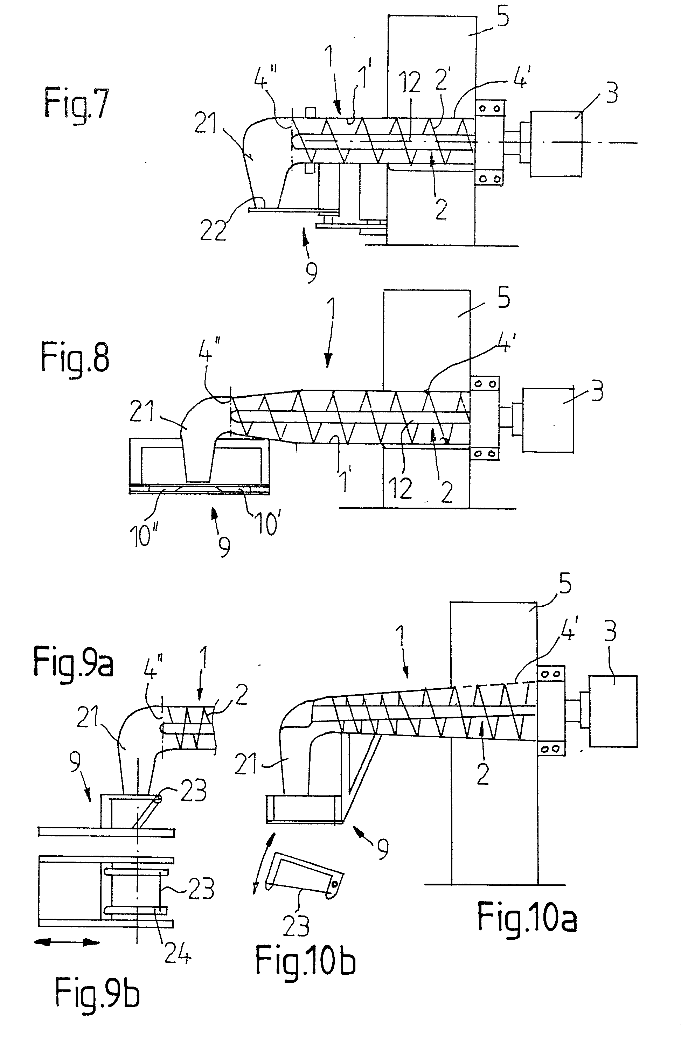

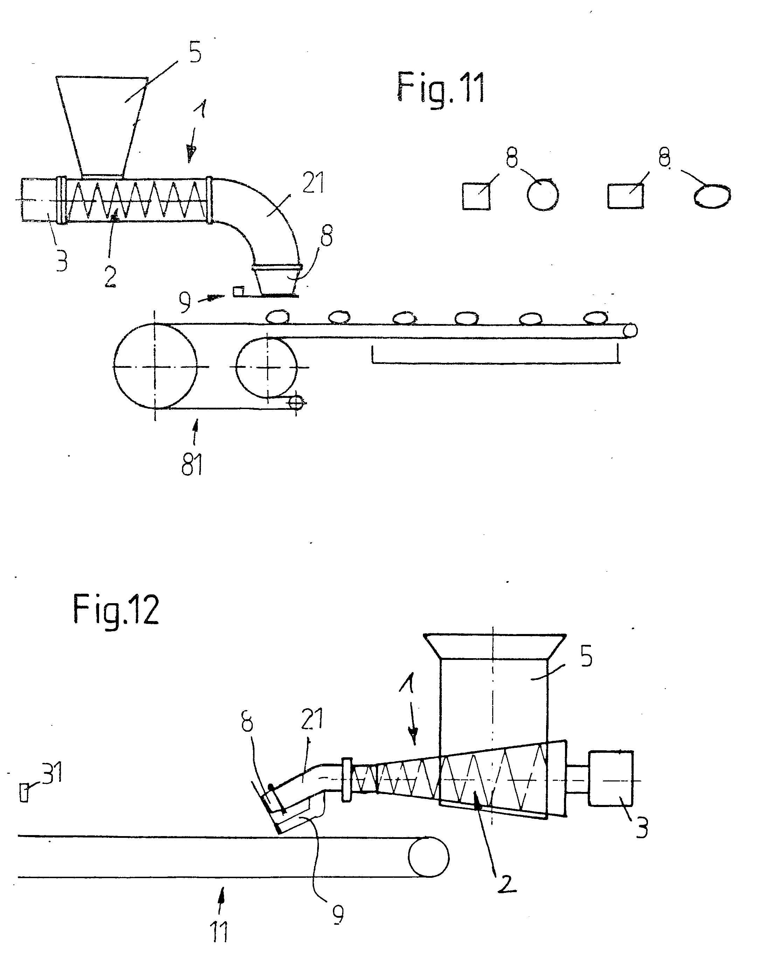

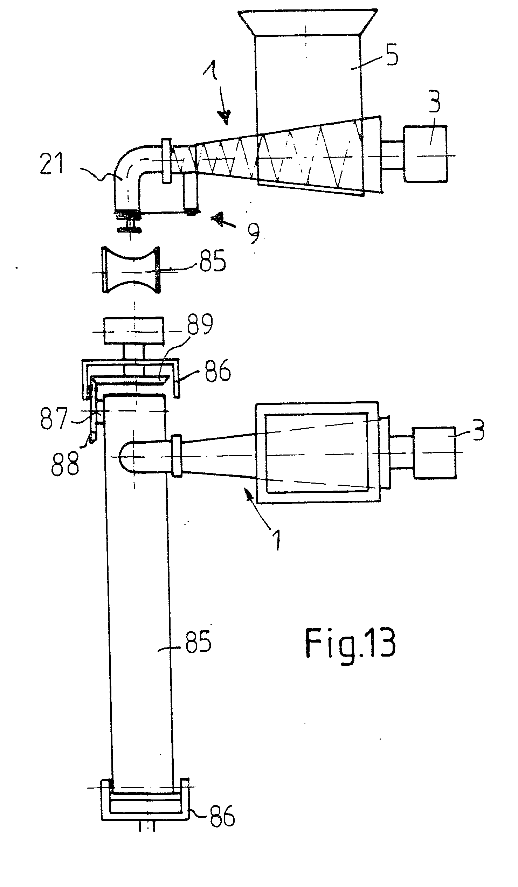

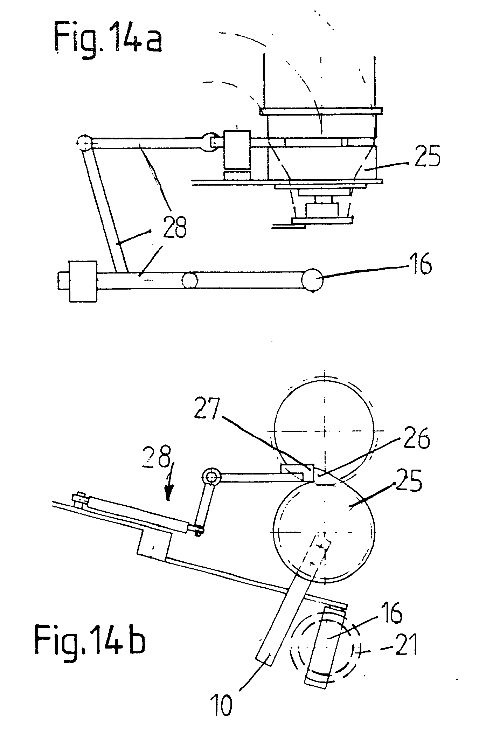

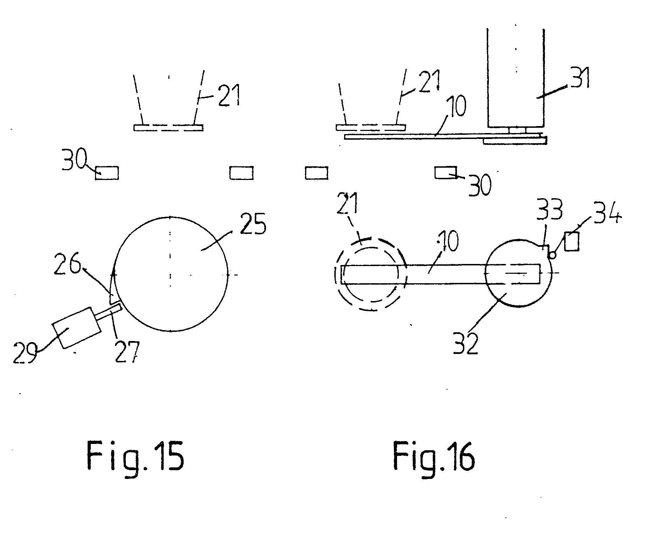

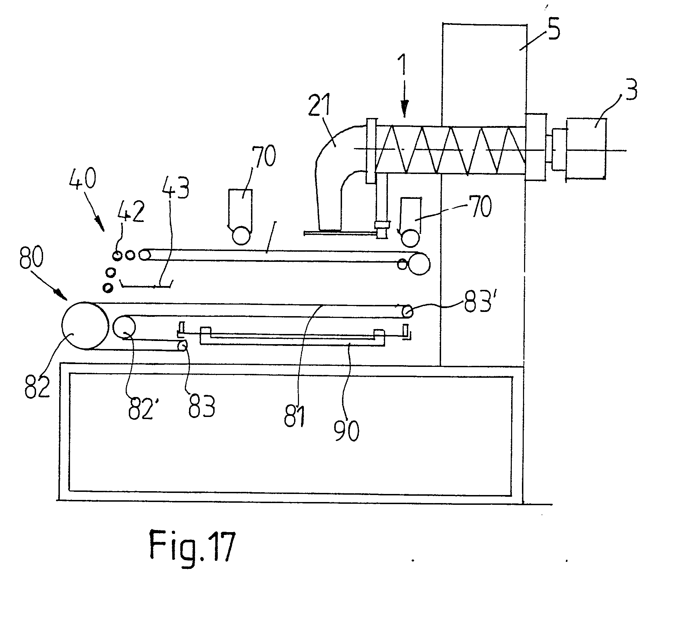

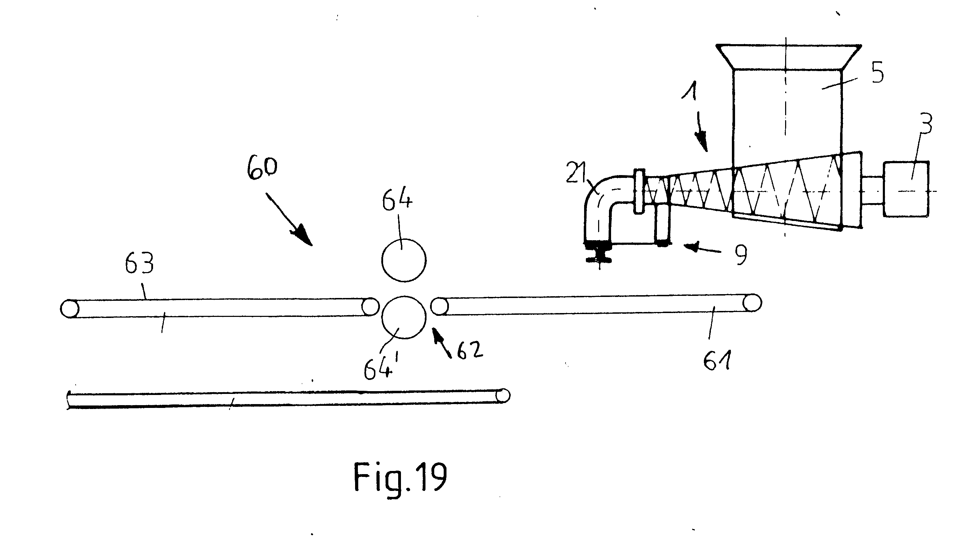

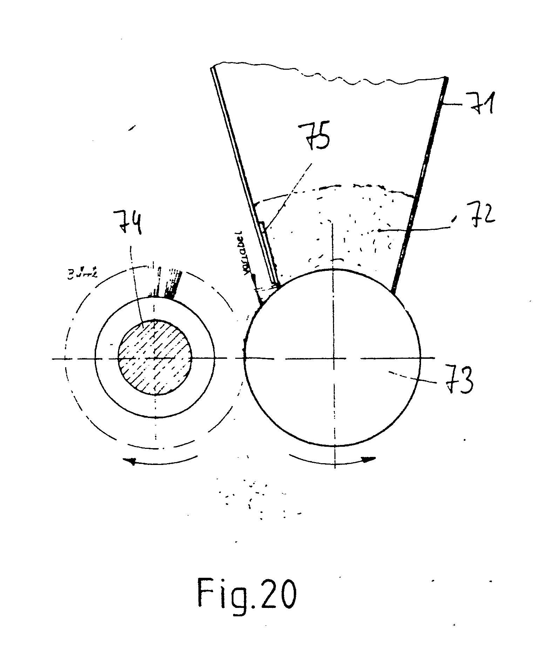

Nachstehend wird die Erfindung an Ausführungsbeispielen anhand der Zeichnungen näher erläutert. Es zeigen: Fig. 1-3 schematisch je eine Ausführungsform einer erfindungsgemäßen Vorrichtung mit einem Staubolzen als Einbauteil in Seitenansicht, Fig. 4 schematisch eine weitere Ausführungsform der Vorrichtung mit einem Ansatz als Einbauteil in Seitenansicht, Fig. 4a einen Schnitt entlang der Linie AB in Fig. 4, Fig. 5 ähnlich Fig. 4 eine weitere Ausführungsform der Vorrichtung in Seitenansicht, und Fig. 6 eine erfindungsgemäße Vorrichtung mit einer Auslösevorrichtung für die Schneideinrichtung in Stirnansicht . Fig. 7 schematisch einen Schnitt durch eine erste Ausführungsform der erfindungsgemäßen Vorrichtung, Fig. 8 ähnl. Fig. 7 eine Ausführungsform im Schnitt, Fig. 9 eine Schneckenpresse mit nachgeordneter Schneideinrichtung im Aufriß (Fig. 9 a) und im Grundriß (Fig. 9b), Fig.10 a,b eine weitere Ausführungsform der Erfindung, Fig. 11 schematisch eine weitere Ausführungsform der Erfindung im Aufriß, Fig. 12 eine weitere Ausführungsform der Erfindung im Aufriß, Fig.13 eine weitere Ausführungsform der Erfindung, Fig. 14 bis 16 verschiedene Ausführungsformen der Schneideinrichtung in Auf- und Grundriß, Fig. 17 bis 19 weitere Ausführungsformen der Erfindung und Fig.20 eine Berieselungsvorrichtung im Schnitt.

eine Ausführungsform der Erfindung weist eine in einem Gehäuse 1 angeordnete Förderschnecke 2 auf, welche um eine im wesentlichen horizontale Achse umläuft und durch einen am Gehäuse 1 angeflanschten Antrieb 3 angetrieben wird. Das Gehäuse 1 besitzt einen trogförmigen Abschnitt 4, in welchen ein sich nach unten erweiternder Teigvorratsbehälter 5 mündet, einen an diesen anschließenden rohrförmigen Gehäuseabschnitt, welcher zusammen mit der Förderschnecke 2 einen Preßabschnitt 6 bildet, und einen an letzteren anschließenden, eine zusätzliche Förderquerschnittsverengung aufweisenden, vorzugsweise als rohrförmiger Krümmer ausgebildeten, Stauabschnitt 7, an welchem eine Austrittsdüse 8 befestigt ist. Unmittelbar zur Austrittsöffnung der Austrittsdüse 8 benachbart ist eine Schneideinrichtung 9 mit einem um eine vertikale Achse drehbaren horizontal angeordneten Messer 10. Unterhalb der Austrittsdüse 8 ist im vertikalen Abstand von dieser ein Transportband 11 zum Abtransport der geteilten Teigstücke vorgesehen.

Um den zum weitgehenden Auspressen der Gärgase erforderlichen hohen Druck im Preßabschnitt 6 zu erreichen, sieht die Erfindung mehrere unterschiedliche Ausführungsvarianten der Förderschnecke 2 bzw. des rohrförmigen Gehäuseabschnittes im Bereich des Preßabschnittes 6 vor. Bei der in Fig. 1 dargestellten Variante ist die Förderschnecke 2 mit einer zylindrischen Hüllfläche versehen und weist im Preßabschnitt 6 die gleiche Steigung auf wie im trogförmigen Abschnitt 4 des Gehäuses 1. Der Schneckenkern 12 dieser Variante ist zylindrisch ausgebildet.

Bei der in Fig. 2 dargestellten Variante des Preßabschnittes 6 ist die Förderschnecke 2 ebenfalls über ihre gesamte Länge mit einer zylindrischen Hüllfläche versehen und weist einen zylindrischen Kern 12 auf. Im Bereich des Preßabschnittes 6 ist diese Schnecke mit einer zur Austrittsdüse 8 hin abnehmenden Steigung der Schneckengänge ausgestattet.

Bei der Ausführungsform gemäß Fig. 3 wird eine über ihre gesamte Länge mit einer zylindrischen Hüllfläche versehene Förderschnecke 2 verwendet, deren Schneckenkern 12 kegelförmig ausgebildet ist, wobei der Kerndurchmesser zur Austrittsdüse 8 hin zunimmt, und deren Steigung über ihre gesamte Länge gleich bleibt.

Bei dem Ausführungsbeispiel Fig. 4 ist die Förderschnecke 2 ähnlich dem Ausführungsbeispiel der Fig. 2 ausgebildet.

Der rohrförmige Gehäuseabschnitt, welchen die Förderschecke 2 im Preßabschnitt 6 umgibt, ist bei den Ausführungsbeispielen 1 - 4 als zylindrisches Rohr ausgebildet. Beim Ausführungsbeispiel der Fig. 5 ist dieser Gehäuseabschnitt als konisches Rohr ausgebildet, welches sich in Richtung zur Austrittsdüse 8 hin verjüngt.

Das in Fig. 5 dargestellte Ausführungsbeispiel der erfindungsgemäßen Teigteilvorrichtung ist mit einer Förderschnecke 2 mit zylindrischem Schneckenkern 12 versehen, wobei die Förderschnecke 2 an ihrem in den konischen Preßabschnitt 6 ragenden Teil eine konische Hüllfläche sowie in Richtung zur Austrittsdüse 8 hin enger werdende Schneckengänge aufweist.

Durch diese verschiedenen Ausführungsformen einer erfindungsgemäßen Vorrichtung kann je nach Teigzusammensetzung auch bei weichen Teigen wie z.B. bei Semmelteigen, ein ausreichend hoher Druck im Teig vor dem Teilen des Teiges in gewichtsgleiche Teigstücke erzielt werden, um die Teilgenauigkeit zu erhöhen. Bei allen dargestellten Ausführungsformen des Preßabschnittes 6 nimmt das Fördervolumen der Förderschnecke 2 vom Teigvorratsbehälter 5 zur Austrittsdüse 8 hin ab und der Druck im Teig zu.

Neben der unterschiedlichen Ausgestaltung von Schneckensteigung und Schneckenkern 12 kann die Höhe des im Teig erzielten Druckes auch durch die Länge des Preßabschnittes verändert werden. Dazu kann der rohrförmige Gehäuseabschnitt des Preßabschnittes 6 als auswechselbares Rohr ausgebildet sein, welches je nach der gewünschten Länge des Preßabschnittes 6 gegen Rohrstücke gleichen Durchmessers, aber unterschiedlicher Länge, ausgetauscht werden kann. Ist die Änderung der Länge des jeweiligen Preßabschnittes 6 nur geringfügig, so kann die entsprechende Veränderung der Förderschnecke 2 durch entsprechendes axiales Verschieben derselben erreicht werden. Sind die Längenunterschiede größer, so wird die jeweilige Förderschnecke 2 gegen eine entsprechend längere ausgetauscht.

Zwischen dem Preßabschnitt 6 und der Austrittsdüse 8 ist im Stauabschnitt 7 des Gehäuses 1 eine zusätzliche Förderquerschnittsverengung angeordnet. Der Stauabschnitt 7 ist in den Beispielen der Fig. 1 bis 6 als an den Preßabschnitt 6 anschließendes Rohrknie ausgebildet. Die zusätzliche Förderquerschnittsverengung ist durch Einbauteile im Stauabschnitt 7 gebildet. Der verbleibende Förderquerschnitt ist vorzugsweise kleiner als der kleinster Förderquerschnitt der Schnecke 2, und kann auch kleiner als der kleinste Querschnitt der Austrittsdüse 8 sein. Bei den Ausführungsbeispielen der Fig. 4 und 5 wird dieser Einbauteil an einem an die Gehäusewand anschließenden Ansatz 13 gebildet. Dieser Ansatz 13 ist im Bereich der äußeren Krümmung des Stauabschnittes 7 vorgesehen und kann mit dessen Wand einstückig ausgebildet oder an dieser befestigt sein. Im Ansatz 13 ist ein Gegenlager für die Förderschnecke 2 ausgebildet wodurch die Förderschnecke 2 beidseitig gelagert ist. Um bei einer beidseitigen Lagerung der Förderschnecke 2 die Schnecke leichter reinigen zu können, ist der Stauabschnitt 7 am Preßabschnitt 6 lösbar befestigt. Um die Größe des verbleibenden Förderquerschnittes je nach dem gewünschten Staudruck im Stauabschnitt verändern zu können, ist der Ansatz 13 an der Innenseite des den Stauabschnitt 7 bildenden Rohrknies abnehmbar befestigt, um gegen andere Ansätze unterschiedlicher Größe ausgetauscht werden zu können. Selbstverständlich sind auch diese Ansätze mit einem Gegenlager für die Förderschnecke 2 ausgerüstet.

Bei den Ausführungsbeispielen der Fig. 1-3 ist der die zusätzliche Förderquerschnittsverengung bildende Einbauteil als Staubolzen 14 ausgebildet, welcher den Stauabschnitt 7 quer zur Förderrichtung des Teiges durchsetzt. Dieser Staubolzen 14 kann im Stauabschnitt 7 integriert sein oder aber auswechselbar ausgebildet sein, wobei die Durchstecköffnungen in der Gehäusewand des Stauabschnittes 7 größer sind als der benötigte Staubolzenquerschnitt, wodurch Staubolzen 14 unterschiedlichen Querschnitts gegeneinander ausgetauscht

0101674

Bei dem in Fig. 3 dargestellten Ausführungsbeispiel ist der Staubolzen 14 mit einem elliptischen Querschnitt versehen, was eine Veränderung des verbleibenden Förderquerschnittes durch Verdrehen des Staubolzens um seine Achse erlaubt.

Die der Austrittsdüse 8 nachgeordnete Schneideinrichtung 9 kann elektrisch intermittierend betätigt werden, wodurch die Länge des abzutrennenden durch die Austrittsdüse 8 ausgepreßten Teigstrangstückes und dadurch das Gewicht des abgetrennten Teigstückes der Zeitspanne zwischen zwei aufeinander folgenden Schneidvorgängen entspricht. Um die dadurch erzielbare Teilgenauigkeit zu erhöhen, wird die Schneideinrichtung 9 durch den austretenden Teigstrang selbst ausgelöst, indem der Teigstrang mit seinem Vorderende eine Lichtschranke unterbricht und so den Schneidvorgang durch das Messer 10 auslöst.

Nach dem Abschneiden eines Teigstückes von dem aus der Austrittsdüse 8 ausgepreßten Teigstrang, wird dieser weiter aus der Austrittsdüse hinausgepreßt . Mit dem Austreten des Teigstranges aus der Austrittsdüse 8 tritt eine Entspannung des zusammengepreßten Teigstranges ein, wodurch sich die Schnittfläche an der Stirnseite des Teigstranges ungleichmäßig wölbt. Durch die sich ergebenden vom abgetrennten Teigstück zu abgetrennten Teigstück unterschiedlichen Unregelmäßigkeiten wird eine kleine Schwankung in der Teilgenauigkeit hervorgerufen. Um diese geringfügigen Gewichtsdifferenzen auszugleichen, sieht die Erfindung eine Auslöseeinrichtung 15 für die Schneideinrichtung 9 vor, mit einem über eine A drückfläche für die Stirnseite des ausgepreßten Teigstranges betätigbaren Schalter der die Bewegung des Messers 10 elektrisch auslöst und erst dann betätigt wird, wenn die Stirnfläche des ausgespreßten Teigstranges durch die Andrückfläche glatt gedrückt worden ist. Diese Andrückfläche kann an einer schwenkbaren Klappe oder Walze ausgebildet sein, welche entgegen der Auspreßrichtung des Teigstranges mit einem bestimmten Druck vorbelastet ist. Bei dem in Fig. 6 dargestellten Ausführungsbeispiel ist die Andrückfläche für das Ende des ausgepreßten Teigstranges an der Oberfläche einer Walze 16 ausgebildet, welche am Ende eines um einen seitlich zur Achse des ausgepreßten Teigstranges gelegenen Drehpunkt 17 drehbaren zweiarmigen Hebels 18 angebracht ist, dessen anderes Ende mit einer Lichtschranke oder mit einem induktiven Endschalter 20 zusammenwirkt. Der zweiarmi ge Hebel 18 ist an seinem den Endschalter 20 auslösenden Arm durch eine Druckfeder 19 belastet, welche die Walze 16 gegen das Ende des ausgepreßten Teigstranges drückt und den induktiven Endschalter 20 offen hält. Wird nun die Walze 16 durch den austretenden Teigstrang entgegen der Kraft der Feder 19 niedergedrückt, so werden zuerst die Unebenheiten an der Stirnseite des ausgepreßten Teigstranges von der Walzenoberfläche eingeebnet und der Hebel 18 erst dann verschwenkt, wenn der ausgepreßte Teigstrang die Kraft der Feder 19 überwunden hat. Dann erst wird der Hebel 18 verschwenkt und der induktive Endschalter 20 löst die Schneidbewegung des Messers 10 aus. Durch diese wird das ausgepreßte Teigstrangstück von dem in der Austrittsdüse 8 befindlichen Teigstrang getrennt und das so entstandene Teigstück fällt auf das unterhalb der Walze 16 angeordnete Transportband 11, wobei die am Hebel 18 frei drehbar gelagerte Walze 16 die Übergabe des Teigstückes auf das Transportband 11 begünstigt.

Selbstverständlich kann die zusätzliche Förderquerschnittsverengung nach dem Preßabschnitt 6 auch durch andere Einbauteile im Stauabschnitt 7 erfolgen. Weiters können diese Einbauteile auch unmittelbar in der Austrittsdüse vor deren Austrittsquerschnitt angeordnet sein. Die Anordnung solcher Einbauteile in der Austrittsdüse selbst ist beispielsweise dann zweckmäßig, wenn der Einbauteil bzw. der verbleibende Förderquerschnitt der Größe bzw. Form der Austrittsöffnung der Austrittsdüse entsprechend angepaßt werden muß. So benötigt beispielsweise ein dreieckiger Querschnitt eine andere Dimension eines Staubolzen oder eines sonstigen Einbauteiles als beispielsweise ein quadratischer oder sechseckiger Austrittsquerschnitt.

Auch die erfindungsgemäße Ausgestaltung der Auslöseeinrichtung der Schneideinrichtung kann in einigen Details geändert werden, ohne den Bereich der vorliegenden Erfindung zu verlassen. So kann beispielsweise die Schneidbewegung des Messers auch durch einen Schalter ausgelöst werden, der durch eine nach Überschreiten eines bestimmten Druckes aus dem Bereich des Teigstranges schwenkenden Klappe betätigt wird.

Eine erfindungsgemäße Vorrichtung zum Herstellen geteilter und geformter Teigstücke besteht aus einer Schneckenpresse mit angefügtem Teigvorratsbehälter und angebauter Schneidein- richtung sowie einer unterhalb dieser angeordneten Übergabeeinrichtung. Gemäß einem Ausführungsbeispiel ist in einem Gehäuse 1 eine Schnecke 2 drehbar gelagert. Oberhalb der Schnecke 2 mündet ein Vorratsbehälter 5 in das Gehäuseinnere. Der Vorratsbehälter 5 kann als Trichter ausgebildet sein oder auch vertikale Wände aufweisen. Bevorzugt wird als Vorratsbehälter 5 ein sich nach unten erweiternder Trichter verwendet. Der Vorratsbehälter 5 kann auf das Gehäuse 1 aufgesetzt sein oder mit diesem einstückig ausgebildet sein. Neben der im Bereich des Anfanges der Schnecke 2 ausgebildeten Eintrittsöffnung 4' des Gehäuses 1, in welcher der Vorratsbehälter 5 mündet, weist das Gehäuse 1 eine Austrittsöffnung 4" auf, welche im Bereich des Schneckenendes angeordnet ist. An die Austrittsöffnung 4" ist ein Auspreßstutzen 21 angeschlossen, welcher unmittelbar vor einer Schneideinrichtung 9 endet. An dem beim Schneckenanfang gelegenen Gehäuseende ist ein Antrieb 3 für die Schnecke 2 vorgesehen. Gemäß dem in Fig. 7 dargestellten Ausführungsbeispiel ist die die Schnecke 2 umhüllende Gehäusewand 1' als Zylinder ausgebildet, in welchem die mit einem zylindrischer Kern 12 versehene Schnecke 2 angeordnet ist. Die Schnecke 2 ist mit Schneckengängen 2' gleichbleibender Steigung versehen, die bis zur Austrittsöffnung 4" des Gehäuses 1 reichen. An der Austrittsöffnung 4" des Gehäuses 2 ist ein, mit den letzterem einstückig ausgeführter Auspreßstutzen 21 angeschlossen. Der Querschnitt dieses Auspreßstutzens 21 verjüngt sich von der Austrittsöffnung 4" des Gehäuses 1 zu seiner Austrittsöffnung 23 hin, wobei der Querschnitt letzterer kleiner ist als der Förderquerschnitt der Schnecke 2. Unterhalb des Auspreßstutzens 21 ist die mit einem rotierenden Messer versehene Schneideinrichtung 9, welche von einem nicht dargestellten Geber gesteuert wird, angeordnet.

Durch die Ausführung der Schneckenpresse mit einer zylindrischen Schnecke 2 mit über ihre Länge gleichbleibendem Förderquerschnitt und mit einem Auspreßstutzen dessen Querschnitt in Auspreßrichtung bis auf eine Größe unterhalb des Förderquerschnittes der Schnecke abnimmt, wird eine besonders schonende Verdichtung vorallem sehr weicher Teige erreicht. Dabei ist der zwischen dem Außenumfang der Schnecke 2 und der Gehäuse wand 1' vorgesehene Spalt nur so groß, daß sich die Schnecke im Gehäuse drehen kann, aber so klein, daß der Teig zwischen Gehäusewand und Außenumfang der Schnecke nicht hindurchtreten kann. Um das Mitnehmen besonders weicher Teige durch die Schnecke zu gewährleisten ist das Schneckengehäuse im Bereich der Eintrittsöffnung 4' erweitert. Bei der in Fig. 8 dargestellten Ausführungsform ist die die Schnecke 2 umhüllende Gehäusewand 1' im Bereich der Eintrittsöffnung 4' zylindrisch und im Bereich der Austrittsöffnung 4" konisch ausgebildet. Der Kern 12 der Schnecke 2 ist als zylindrische Welle ausgebildet, die sich durch die Austrittsöffnung 4" bis in den Auspreß- stutzen erstreckt. Die Schnecke 2 besitzt eine gleichbleibende Steigung. Die Austrittsöffnung des Gehäuses ist koaxial zur Schneckenachse angeordnet. An die Austrittsöffnung schließt sich ein bogenförmiger Auspreßstutzen 21 an, unter dessen Austrittsöffnung 22 eine Schneideinrichtung 9 angeordnet ist,

die durch einen nachgeschalteten Geber gesteuert wird. Bei der in Fig. 8 dargestellten Variante weist die Schneideinrichtung 9 als Trennelemente zwei Messer 10',10" auf, die in einer zur Austrittsöffnung 22 des Auspreßstutzens 21 parallelen Ebene angeordnet sind. Die beiden Messer 10',10" sind in Führungen quer zum aus der Austrittsöffnung austretenden Teigstrang verschiebbar, wobei die beiden Messer 10',10" beim Trennvorgang aufeinander zu bewegt werden bis zwischen deren Schneiden nur mehr ein sehr kleiner Spalt verbleibt. Dies reicht zum Teilen des Teigstranges völlig aus.

Gemäß dem in Fig. 9 dargestellten Ausführungsbeispiel schließt an die Austrittsöffnung 4" ein Auspreßstutzen 21 an, welcher vor einer mit einem Schneiddraht 23 versehenen Schneideinrichtung 9 endet. Der Schneiddraht 23 ist in einem Schlitten 24 befestigt welcher quer zum Auspreßstutzen hin- und hergeschoben wird. Die Bewegung des Schlittens 24 wird durch einen nachgeordneten Geber z.B. eine Lichtschranke gesteuert.

Bei der in Fig. 10 dargestellten Ausführungsform ist die die Schnecke 2 umhüllende Gehäusewand 2' als sich von der Eintrittsöffnung 4' zur Austrittsöffnung 4" hin verjüngender Konus ausgebildet. In dieses Gehäuse ist eine Schnecke 2 eingesetzt, deren Kerndurchmesser zur Austrittsöffnung 4" hin zunimmt ebenso wie die Steigung der Schnecke. Das Gehäuse geht an der Austrittsöffnung 4" in den Auspreßstutzen 21 über an den die Schneideinrichtung 9 anschließt, welche einer um eine zur Austrittsöffnung senkrechte Achse drehbaren mit einem Schneiddraht 23 versehenen Halter aufweist.

Bei den dargestellten Ausführungsformen kann die Steigung der Schnecke 2 vom Schrekkenanfang unterhalb des Vorratsbehälters 5 zur Austrittsöffnung 4" hin kontinuierlich zu nehmen, wobei das Fördervolumen in derselben Richtung kontinuierlich abnimmt, so daß der Teig durch die Austrittsöffnung 4" des Gehäuses 1 hinausgepreßt wird. Dabei wird der Teig im Gehäuse auch bei festen Teigen unter einen so hohen Druck gesetzt, daß die Gärgase aus dem Teig weitgehend ausgepreßt werden.

Wie aus Fig. 11 zu entnehmen, ist der Auspreßstutzen 21 im Bereich seiner Austritts-öffnung als sich in Strömungsrichtung des Teiges verjüngende Auspreßdüse 8 ausgebildet. Diese ist am Auspreßstutzen 21 abnehmbar befestigt und kann gegen Düsen mit anderen Austrittsquerschnitten ausgetauscht werden. Die Auspreßdüse 8 kann an einen als gebogenes Rohr ausgebildeten Auspreßstutzen angeschlossen sein, wobei der Teigstrang im wesentlichen vertikal aus dem Austrittsquerschnitt des Auspreßstutzens bzw. der Auspreßdüse austritt.

Die Auspreßdüse kann aber auch an einem mit einem zur Schneckenachse schräg verlaufenden Austrittsende versehenen Auspreßstutzen angebracht sein. Dies ist besonders bei länglichen Teigstücken von Vorteil, weil diese dann auf ein in nur kurzem Abstand unterhalb der Austrittsöffnung angeordnetes Förderband 11 abgesetzt werden können, wobei dann eine oberhalb desselben angeordnete Lichtschranke 24 die Schneidein-richtung 9 steuert (Fig. 12)

Gemäß einer Ausführungsform der Schneideinrichtung ist unterhalb der Austrittsöffnung 22 des Auspreßstutzens 21 oder der Auspreßdüse 8 ein auf einer Eintourenkupp-lung 25 befestigtes Messer 10 angeordnet. Die Eintourenkupplung weist an ihrem Umfang eine Rastnocke 26 auf, gegen die ein Raststück 27 anliegt. Dieses ist über ein Gestänge 28 mit einer unterhalb der Austrittsöffnung 22 des Auspreßstutzens 21 oder der Auspreßdüse angeordneten Rolle 16 verbunden. Sobald das Teigstück auf die Rolle 16 drückt, wird über das Gestänge 28 das Anschlagstück 27 aus der Einrastung gehoben und die Eintourenkupplung 25 wird freigegeben. Das mit der Eintourenkupplung 25 verbundene Messer 10 trennt das Teigstück ab und die Bewegung des Messers 10 wird abge-stoppt sobald die Rastnocke 26 gegen das Raststück 27 stößt.

Gemäß einer Variante der Schneideinrichtung ist das Raststück 27 an einem Hubmagne-ten 29 befestigt, welcher durch eine dem Messer nachgeordnete Lichtschranke 30 ausg löst wird. Erreicht das Teigstück die Lichtschranke 30, wird ein Impuls ausgelöst, wodurch der Hebel des Hubmagneten 29 angezogen wird und die Eintourenkupplung wird wieder freigegeben.

Gemäß einer weiteren Variante ist das Messer 10 direkt an einem Antriebsstummel eines Motors 31 befestigt. Der Antriebsstummel trägt weiters eine Nockenscheibe 32 deren Ausschaltnocke 33 einen Endschalter 34 betätigt der den Motor 31 abschaltet. Es wird durch das Auslösen der Lichtschranke 30 ein Impuls an den Motor 31 gegeben wodurch dieser zu drehen beginnt. Nach einer Umdrehung wird über der Nockenscheibe 32 ein Endschalter 34 betätigt und der Motor wird ausgeschaltet.

In Fig. 17 ist eine Ausführungsform der Erfindung dargestellt, bei der unterhalb der Schneideinrichtung 9 eine Übergabevorrichtung 40 angeordnet ist. Diese besteht aus einem Transportband 41, oberhalb welchem zwei Berieselungseinrichtungen 70 angeordnet sind. Am vorderen Ende dieses Transportbandes 41 sind mehrere angetriebene Walzen 42 angeordnet, zwischen welchen überschüssiges Berieselungsgut in einen unterhalb angeordneten Auffangbehälter 43 fällt.

Unterhalb des Transportbandes 41 ist ein Sammelabziehband 81 angeordnet, welches um zwei ortsfeste Trommeln 82,82' und um zwei verschiebbare Walzen 83,83' umläuft.

Dabei können die verschiebbaren Walzen 83,83' mittels an den Achsen derselben angreifenden Seile od. Ketten od. dgl. die über eine antreibbare ortsfeste Umlenkwalze od. zwei antreibbare ortsfeste Umlenkrollen laufen, miteinander verbunden sein.

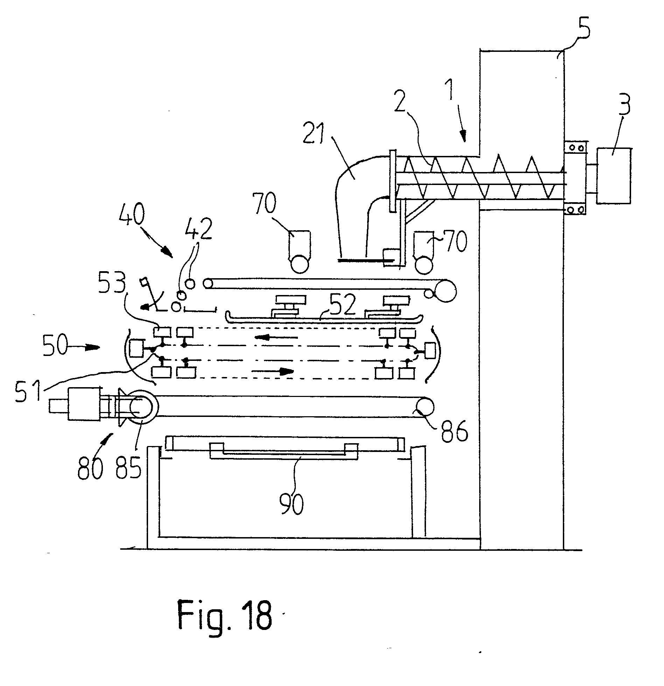

In Fig. 18 ist ähnlich wie bei der Ausführungsform der Fig. 17 unterhalb der Schneideinrichtung 9 eine Übergabevorrichtung 40 angeordnet, welcher eine Schleifeinrichtung 50 nachgeordnet ist.

Die Schleifeinrichtung 50 besteht aus einem in einer vertikalen Ebene umlaufenden Becherband 51 dessen Becher als Behälter 51 zur Aufnahme der portionierten Teigstücke ausgebildet sind. Die Behälter 51 sind als Zylinder mit verschiebbaren Kolben als Behälterboden ausgebildet. Das Becherband kann mit Behältern gleicher Größe bestückt sein.

Es kann aber auch vorgesehen sein, daß das Becherband 51 mehrere hintereinander angeordnete Behälter 53 unterschiedlicher Größe für die Aufnahme je nach Behältergröße unterschiedlich großer oder unterschiedlich vieler gleich großer Teigstücke aufweist.

Oberhalb des oberen Trumes des Becherbandes 51 ist eine Schleifplatte 52 angeordnet.

Unterhalb des unteren Trumes des Becherbandes 51 ist ein Sammeldrehband 85 angeordnet, welches einen länglichen um seine Längsachse drehbaren Rahmen 86 aufweist, in welchem ein endloses Band in Längsrichtung umläuft, wobei die Antriebstrommel 87 des Bandes im Bereich eines der schmalen Enden des Rahmens 86 angeordnet ist und auf ihrer Achse ein Kegelrad trägt, welches mit einem auf der Längsachse des Rahmens 86 angeordneten Kegelrad 89 kämmt, welchletzteres auf einer den Rahmen 86 durchsetzenden Antriebswelle sitzt.

Der Rahmen 86 wird immer dann wenn eine Reihe Teiglinge auf die unterhalb des Sammel drehbandes 85 angeordnete Transporteinrichtung 90 abgesetzt werden soll, mittels eines Klinkentriebes od. dgl. um 180° gedreht, wobei das Band selbst ständig umläuft.

Die Berieselungseinrichtung 70 weist eine gerändelte Walze 73 sowie eine parallel dazu angeordnete Bürste 74 auf. Oberhalb der Walze 73 ist ein Vorratsbehälter 71 für das Berieselungsgut 72 angeordnet, welche an seinem unteren Ende von der Walze 73 abgeschlossen ist und dessen in Drehrichtung der Walze 73 vorne gelegenen Begrenzungswand ein Spalt gegenüber der Walze 73 ausgebildet ist, welcher von einem auf der Begrenzungswand angebrachten Schieber 74 verstellt werden kann.

0101674

Bei der Verarbeitung von Teigen zu europäischem Brot werden um Klebeerscheinungen hintan zu halten die Teigstücke mit Mehl bestaubt. Statt mit Mehl zu bestauben können die Teigstücke erfindungsgemäß mit einem Ventilator übertrocknet werden. Bei diesen europäischen Brotsorten beträgt die Wasserzugabe zum Mehl bei der Teigbereitung 50 bis max. 58% des Mehlgewichtes. Bei den arabischen Broten, dem Fladenbrot, kann die Wasserzugabe wesentlich größer sein. Um ein Ankleben an die die Teigstücke berührende Flächen der Maschinen zu vermeiden genügt ein Bestauben nicht mehr. Die mit der Maschine in Berührung kommenden Flächen des Teiges müssen vielmehr mit einer Schicht von Mehl oder Kleie überzogen werden, die so dick sein muß, daß bei der durch das Walzen enstehenden größeren Oberfläche das Teigstück noch immer mit Mehl oder Kleie bedeckt ist. Zur Abtrocknung dieser Fladenbrotoberfläche kann zusätzlich ein Ventilator aufgebaut werden. Das Überziehen geschieht dadurch , daß von einem Berieselungsapparat das Förderband mit einer Schicht Mehl oder Kleie bedeckt wird auf die das abgeteilte Teigstück fällt. Dieses wird dann von oben ebenfalls mit Mehl oder Kleie berieselt.

Bei stärkerer Verformung durch das Walzen muß gegebenenfalls der Walz- und Berieselungsvorgang ein-oder zweimal wiederholt werden.

Die erfindungsgemäßeVorrichtung funktioniert wie folgt:

In dem nach unten leicht größer werdenden Trichter wird der eingefüllte Teig durch die Schnecke in Richtung Auspreßöffnung transportiert bzw. gepreßt.

Das automatische Teilen des Teiges erfolgt durch Abtrennen des ausgepreßten Teigstranges mit der Schneidein - richtung in Stücke mit dem gewünschten Gewicht. Dem Gewicht entspricht bei gleichbleibendem Querschnitt eine bestimmte Länge des Teigstükkes.

Diese Länge wird

a) durch Auslösung einer Trenneinrichtung durch Betätigung eines Hebelmechanismus durch das diesen Mechanismus berührenden Teigstück bestimmt.

b) Nach einer zweiten Variante wird die Einschaltung der Trennvorrichtung durch einen Lichtschranken ausgelöst, sobald das Teigstück zu diesem Lichtschranken kommt.

Anschließend werden die Teigstücke weiterbehandelt.

a) die Teilstücke fallen auf ein unter der Auspreßöffnung in entsprechendem Abstand angeordnetes Transportband, das die Teigstücke herausbefördert wo sie z.B. von Hand abgenommen werden.

b) das Förderband und die Teigstücke können hiebei für die weitere Verarbeitung, damit der Klebeeffekt verringert wird, durch einen Ventilator übertrocknet werden, wer das Bestauben mit Mehl unerwünscht ist, oder sie können mit Mehl bestaubt werden. Sc len extrem naße Teige geteilt werden, dann muß das Transportband und das Teigstück mit einer so dicken Schicht Mehl, Kleie oder sonstiges bedeckt werden, daß es nicht kleben bleiben kann. Das geschieht dadurch, daß das Berieselungsmittel so dicht wie ein Vorhang daraufrieselt und das überschüssige Berieselungsmittel in einer Tasse ge sammelt und von Hand oder automatisch in die Berieselungseinrichtung zurück beförder

c) Nach einer weiteren Variante fallen die Teigstücke nicht auf ein Band, das gerade oder konvex sein kann, sondern in kleine Behälter deren Boden gegebenenfalls verstellbar ist. Über diese Behälter ist eine Schleifplatte oder sind Stempeln angeordnet, die gegebenenfalls der Höhe nach verstellbar sind. Durch die Exzenterbewegung der Schleifplatte oder der Stempel werden die Teigstücke kugelig geformt.

Je nach der Anzahl der hintereinander angeordneten Behälter bzw. durch Unterteilung oder Einschaltung mehrerer Stempel kann die Zeit zum Kugeligformen variiert werden.

Weitergabe der geteilten oder geteilten und kugelig geformten Teigstücke:

Die Teigstücke müssen vor der Weiterverarbeitung oder vor dem Backen gären. Zu diesem Zweck werden sie auf Gärunterlagen oder Backunterlagen automatisch abgesetzt. Die Gärunterlagen sind bei kleineren Betrieben niedere Kästen, bei größeren Betrieben meist bewegliche Tassen oder Transportbänder, Backbleche können bei bestimmten Gebäcksorten gleichzeitig als Gär- und Backunterlagen verwendet werden.

Damit die Gär- oder Backunterlage automatisch belegt werden kann, wird das Band auf dem die abgetrennten Teigstücke fallen nicht nur in eine Richtung laufend fortbewegt.

Es wird dieses Band als Sammelabziehband ausgebildet, das nach der gewünschten Belegung mit Teigstücken beim Abziehen die Teigstücke reihenweise absetzt, oder das, sobald die gewünschte Anzahl von Teigstücken am Band ist, um 180° gedreht wird und dadurch die Teigstücke absetzt.

Die Unterlage auf die die Teigstücke reihenweise abgesetzt werden, kann soferne das Band nicht aus Bechern besteht, wiederum mit variabler Geschwindigkeit angetrieben werden und damit der Abstand der Reihen variiert werden.

Durch die Variierung der Geschwindigkeit beim Absetzen in der Reihe und in der Variierung der Geschwindigkeit beim Absetzen der Reihen ist es möglich bei verschiedenen Größen und Formen des Gebäcks diese so abzusetzen, daß die bestmöglichen Abstände erreicht und damit ein Maximum an Platzausnützung, aber auch der Qualität der Backware erreicht wird.

Formen der abgetrennten Teigstücke und Weiterleitung derselben:

Wenn das abgetrennte Teigstück bearbeitet werden soll, werden zu dieser Bearbeitung folgende Einrichtungen vorgesehen:

a) Bei Herstellung von gerollten oder gewickelten oder gewickelt und gerollten Teigstücken ohne Zwischengärung: Nach dem Abschneiden der in diesem Falle quadratischen oder rechteckigen Teigstücke werden diese entweder zwischen zwei Bänder oder zwischen einem laufenden Band und einem feststehenden Wirkbrett langgerollt, wobei die Länge des Teigstückes durch den Abstand der übereinander angeordneten laufenden Bänder oder dem Abstand zwischen dem unteren laufenden Band und dem darüber angeordneter Wirkbrett bestimmt wird.

Nach einer weiteren Variante wird das abgetrennte Teigstück in einer Walzvorrichtung 60 bestehend aus Zubringerband 61, Walzeinheit und Abtransportband 63 zwischen zwei in entsprechendem (variierbaren) Abstand laufenden Walzen 64,64' ausgewalzt und anschliessend sofort eingerollt bzw. außerdem noch anschließend langgerollt.

Diese Teigstücke werden nach der Verarbeitung auf ein Sammelabziehband oder auf ein Sammeldrehband abgesetzt, dessen Geschwindigkeit variiert werden kann, so daß die gewünschten Abstände in dieser Reihe erreicht werden.

Durch Variierung der Geschwindigkeit der Gär- oder Backunterlage wird der gewünschte Abstand der Reihen erhalten, sodaß eine maximale Platzausnützung erreicht wird.

Herstellung von Formgebäck:

Je nach der Art des Gebäcks und den damit verbundenen Erfordernissen wird dieses z.B. direkt nach dem Abtrennen oder nach einer extrem kurzen Gärzeit mit einem Stempel geformt und dann wie unter a) angegeben auf eine Gär- oder Backunterlage abgesetzt. Bei einer weiteren Variante und zwar dann wenn das abgetrennte Teigstück kugelig geformt werden soll, werden die Teigstücke entweder in kleine zylindrische oder eckige Behälter oder auf ein gerades oder konvex geformtes Band abgesetzt und mittels einer exzentrisch bewegten Platte mit Rillen oder mittels exzentrisch bewegten Stempeln durch die Exzenterbewegung kugelig geformt. Je nach der Leistung und der Zeitspanne die erforderlich ist, um das Teigstück kugelig zu formen, werden mehrere Teigstücke hintereinander geformt. Diese werden dann einzeln hintereinander auf ein unterhalb angeordnetes Sammelabzieh- oder Sammeldrehband abgesetzt, das die Teigstücke wieder auf die Gär- oder Backunterlage oder auf die zugleich als Gär- und Backunterlage dienende Unterlage automatisch absetzt. Dadurch kann wieder der Abstand in der Reihe und der Abstand der Reihen beliebig, den Erfordernissen entsprechend variiert werden.

P a t e n t a n s p r ü c h e :

1. Vorrichtung zur Herstellung von Teigstücken, mit einer Förderschnecke, die in einem Gehäuse angeordnet ist, in welches ein Teigvorratsbehälter im wesentlichen radial zur Förderschnecke mündet und an welches eine vorzugsweise auswechselbare Austrittsdüse anschließt, durch welche der Teig von der Förderschnecke ausgepreßt wird, und mit einer von dem ausgepreßten Teigstrang auslösbaren , der Austrittsdüse nachgeordneten, selbsttätigen Schneideinrichtung für den Teigstrang, dadurch gekennzeichnet, daß die Förderschnecke (2) einen zwischen der Mündung des Teigvorratsbehälters (5) und der Austrittsdüse (8) angeordneten, axial an die Mündung des Teigvorratsbehälters (5) anschließenden Preßabschnitt (6), in welchem das Fördervolumen zur Austrittsdüse (8) hin abnimmt, aufweist, wobei vorzugsweise die Länge des Preßabschnittes (6) größer ist als der Außendurchmesser der Förderschnecke (2) an der Mündung des Teigvorratsbehälters (5), und daß im Übergangsbereich von der Förderschnecke (2) zur Austrittsöffnung der Austrittsdüse (8) eine zusätzliche Förderquerschnittsverengung vorgesehen ist, und daß gegebenenfalls eine die Schneideinrichtung auslösende, dem ausgepreßten Teigstrang mit einem vorbestimmten Druck entgegenwirkende schwenkbare Klappe oder Walze od.dgl. vorgesehen ist und daß unterhalb der Schneideinrichtung (9) gegebenenfalls eine Übergabevorrichtung (40) und/oder eine Formvorrichtung (50,60) für die ausgepreßten und geteilten Teiglinge vorgesehen ist.

2. Vorrichtung nach Patentanspruch 1, dadurch gekennzeichnet, daß zumindest im Preßabschnitt (6) die Förderschnecke (2) eine zylindrische Hüllfläche besitzt, von einem zylindrischen Gehäusewandabschnitt umgeben ist, mit einer zur Austrittsdüse (8) hin abnehmenden Steigung der Schneckengänge ausgestattet und mit einem, vorzugsweise zylindrischen Schneckenkern versehen ist.

3. Vorrichtung nach Patentanspruch 1 oder 2, dadurch gekennzeichnet, daß die zusätzliche Förderquerschnittsverengung von einem oder mehreren innerhalb des Gehäuses (1) und/oder innerhalb der Austrittsdüse (8) angeordneten Einbauteilen gebildet ist.

4. Vorrichtung nach Patentanspruch 1 oder 2, dadurch gekennzeichnet, daß ein Einbauteil von einem an die Gehäusewand anschließenden, ein Gegenlager der Förderschnecke (2) aufnehmenden Ansatz (13) gebildet ist.

5. Vorrichtung nach Patentanspruch 3, dadurch gekennzeichnet, daß ein Einbauteil als das Gehäuseinnere quer zur Förderschnecke (2) durchsetzender, vorzugsweise auswechselbarer, Staubolzen (14) ausgebildet ist.

6. Vorrichtung nach Patentanspruch 5, dadurch gekennzeichnet, daß der Staubolzen (14) einen elliptischen Querschnitt aufweist und um eine quer zur Förderschnecke (2) gelegene Achse verdrehbar ist.

7. Vorrichtung nach Patentanspruch 1 , dadurch gekennzeichnet, daß die eine Andrückfläche für das Ende des ausgepreßten Teigstranges aufweisende Klappe oder Walze an einem Ende eines federbelasteten zweiarmigen Hebels (18) angebracht ist, dessen anderes Ende mit einer Lichtschanke oder einem induktiven Endschalter (20) zusammenwirkt.

8. Vorrichtung nach einem oder mehreren der vorhergehenden Ansprüche, dadurch gekennzeichnet, daß die unterhalb der Schneid-einrichtung (9) angeordnete Übergabevorrichtung (40) ein Transportband sowie gegebenenfalls oberhalb des Transportbandes ein Gebläse oder eine Berieselungseinrichtung (70) aufweist.

9. Vorrichtung nach einem oder mehreren der vorhergehenden Ansprüche, dadurch gekennzeichnet, daß die Formvorrichtung als Teigrollvorrichtung ausgebildet ist, welche aus einem unteren, die Teiglinge unterstützenden umlaufenden Band und einem oberhalb letzterem angeordneten umlaufenden Wirkband oder feststehenden Wirkbrett besteht, wobei das untere Band vom Transportband der Übergabevorrichtung gebildet ist.

10. Vorrichtung nach einem oder mehreren der Ansprüche 1 bis 8, dadurch gekennzeichnet, daß die Formvorrichtung als Walzvorrichtung (60) ausgebildet ist, welche aus einem Zubringerband (61) mit nachgeordneter Walzeinheit (62) und einem Abtransportband besteht, oberhalb welchem gegebenenfalls eine Einrollvorrichtung für die breitgewalzten Teiglinge angeordnet ist, wobei das Zubringerband vom Transportband der Übergabevorrichtung gebildet ist.

11. Vorrichtung nach einem oder mehreren der Ansprüche 1 bis 8, dadurch gekennzeichnet, daß die Formvorrichtung eine Breitwalzvorrichtung und eine an diese anschließende Langrollvorrichtung für die Teiglinge aufweist, wobei das Zubringerband der Breitwalzvorrichtung vom Transportband der Übergabevorrichtung gebildet ist.

12. Vorrichtung nach einem oder mehreren der vorhergehenden Ansprüche 1 bis 8, dadurch gekennzeichnet, daß die Formvorrichtung oberhalb des Transportbandes der Übergabevorrichtung angeordnete Formstempel od. dgl. für die auf dem Transportband liegenden Teiglinge aufweist.

13. Vorrichtung nach einem oder mehreren der vorhergehenden Ansprüche 1 bis 8, dadurch gekennzeichnet, daß die Formvorrichtung als Schleifeinrichtung (50) ausgebildet ist.

14. Vorrichtung nach Anspruch 13, dadurch gekennzeichnet, daß die Schleifeinrichtung ein unterhalb der Schneideinrichtung (9) angeordnetes endloses in einer vertikalen Ebene umlaufendes, vorzugsweise als Becherband ausgebildetes, Förderband (51) aufweist, oberhalb dessen oberen Trumes eine Schleifplatte (52) und unterhalb dessen unteren Trumes die Übergabeeinrichtung (80) für die aus der Schleifeinrichtung (50) austretenden Teiglinge angeordnet sind.

15. Vorrichtung nach Anspruch 13, dadurch gekennezeichnet, daß das Becherband (51) mehrere hintereinander angeordnete Behälter (51) unterschiedlicher Größe für die Aufnahme je nach Behältergröße unterschiedlich großer oder unterschiedlich vieler gleich großer Teigstücke aufweist.

16. Vorrichtung nach Anspruch 15, dadurch gekennzeichnet, daß jeweils alle Behälter (53) mit unterschiedlicher Größe der Größe nach geordnet und zu einer Gruppe zusammengefaßt sind, sodaß mehrere hintereinander angeordnete gleichartige Gruppen entstehen.

17. Vorrichtung nach Anspruch 15, dadurch gekennzeichnet, daß jeweils alle Behälter (53) mit gleicher Größe zu einer Gruppe zusammengefaßt sind.

18. Vorrichtung nach einem oder mehreren der Ansprüche 14 bis 17, dadurch gekenn- ' zeichnet, daß die Behälter (53) als Zylinder mit unterschiedlichen Durchmessern ausgebildet sind, wobei jeweils der Behälterboden zur Regulierung von Behältervolumen bzw. Schleifdruck als Kolben ausgebildet ist, welcher mittels zwischen den Trumen des Becherbandes (51) angeordneten Führungen verschiebbar ist.

19. Vorrichtung nach Anspruch 13, dadurch gekennzeichnet, daß die Schleifeinrich- ' tung aus einem Transportband und einer Schleifplatte oder mehreren Schleifbechern, welche oberhalb des Transportbandes angeordnet sind, besteht.

20. Vorrichtung nach einem oder mehreren der vorhergehenden Ansprüche, dadurch gekennzeichnet, daß oberhalb jedes Bandes zumindest eine Berieselungseinrichtung (70) angeordnet ist.

21. Vorrichtung nach einem oder mehreren der Ansprüche 1 bis 20, dadurch gekennzeichnet, daß oberhalb jedes Bandes insbesondere über jeder Übergabestelle ein Ge- ' bläse zum Antrocknen der Teigstücke angeordnet ist.

22. Vorrichtung nach einem oder mehreren der vorhergehenden Ansprüche, dadurch gekennzeichnet, daß die Berieselungseinrichtung (70) einen Vorratstrichter (71) für das Berieselungsgut (72) aufweist, an dessen unterem Ende eine mit einer rauhen Oberfläche versehene rotierende Auftragswalze (73) angeordnet ist, von der eine parallel zu dieser angeordnete, entgegengesetzt zur Drehrichtung derselben umlaufende Bürste (74) das Berieselungsgut (72) abnimmt.

23. Vorrichtung nach Anspruch 22, dadurch gekennzeichnet, daß der Vorratsbehälter (71) gegenüber der Auftragswalze (73) abgedichtet ist und an seiner in Drehrichtung vorne gelegenen Begrenzungswand einen vorzugsweise mittels eines Schiebers (75) verstellbaren Spalt gegenüber der Auftragswalze aufweist.

24. Vorrichtung nach einem oder mehreren der vorhergehenden Ansprüche, dadurch gekennzeichnet, daß eine vom Auffangbehälter zu einem oder mehreren der Vorratstrichter oder zu einem zentralen Vorratsbehälter führende Rückfördereinrichtung für das Berieselungsgut vorgesehen ist.

Fig. 1

Fig. 2

Fig. 3

Fig. 4

Fig. 4 a

Fig. 5

Fig. 6

0101674

Fig.7

Fig.8

Fig.9a

Fig.9b

Fig.10b

Fig.10a

Fig.11

Fig.12

Fig.13

Fig.14a

25

28

16

27

28

26

25

16
21

10

Fig.14 b

Fig.15          Fig.16

Fig.17

Fig. 18

Fig.19

Fig.20